# EUROPEAN PATENT APPLICATION

(11) **EP 4 745 553 A1**
(43) Date of publication of application: **20.05.2026**
(21) Application number: 25210469.0
(22) Date of filing: 22.10.2025
(51) Int. Cl.: G01N 11/00, H01M 10/00

(54) **VISCOELASTICITY MEASURING APPARATUS AND METHOD**

(30) Priority: 18.11.2024 KR 20240164259
(71) Applicant: SAMSUNG SDI CO., LTD., Yongin-si, Gyeonggi-do 17084 (KR)
(72) Inventor: CHO, Seonggwan, 17084 Yongin-si (KR); KIM, Sungsoo, 17084 Yongin-si (KR); LEE, Jaehyoun, 17084 Yongin-si (KR); JEON, Keonghee, 17084 Yongin-si (KR); KIM, Bora, 17084 Yongin-si (KR)
(74) Representative: Maiwald GmbH

(57) **Abstract**

A viscoelasticity measurement method may include collecting viscoelastic characteristic data including a loss modulus and a storage modulus measured by applying shear strain to an active material slurry for secondary batteries at a preset interval, calculating a loss factor defined as a ratio between the storage modulus and the loss modulus, and calculating a difference between a current loss factor and a previous loss factor as a loss factor differential, generating time-series data based on the loss factor differential, performing a sliding window analysis on the time-series data and calculating an average value of a plurality of loss factor differentials included in each window, and deriving any one average value from a result of calculating the average value of the plurality of loss factor differentials included in each window, as a damping factor.

## Description

### BACKGROUND

### 1. Field

One or more embodiments of the present disclosure relate to a viscoelasticity measuring apparatus and a method for deriving standardized damping factors of an active material slurry for secondary batteries.

### 2. Description of the Related Art

In industrial processes of processing an active material slurry for secondary batteries, the design and determination of the entire processing facility, including the length, thickness, and angle of production line pipes, may be based on the viscoelastic properties of the slurry. Therefore, measuring the viscoelastic properties of the slurry becomes highly important.

The viscoelastic properties of a slurry may be evaluated using a rheology amplitude device, a type (kind) of viscoelasticity measuring apparatus. However, due to the absence of consistent evaluation criteria, there is a problem where the interpretation of a same viscoelasticity measurement data output from the rheology amplitude device varies from evaluator to evaluator. This variability may make the interpretation of viscoelasticity measurement data and standardization of results difficult.

The above-described information is only intended to facilitate and improve understanding of the background of the present disclosure and may include information that does not constitute prior art.

### SUMMARY

One or more aspects of embodiments of the present disclosure are directed toward a method for (of) accurately determining the viscoelastic properties of an active material slurry for secondary batteries and standardizing the evaluation results thereof.

One or more aspects of embodiments of the present disclosure are directed toward a method for (of) precisely measuring the viscoelastic properties of an active material slurry for secondary batteries to accurately determine whether the slurry is in a liquid state or a solid state.

However, the technical aspects of the present disclosure are not limited to the above-mentioned technical solutions, and additional aspects will be set forth in part in the description which follows and, in part, will be apparent from the description, or may be learned by practice of the presented embodiments.

According to one or more embodiments of the present disclosure, there is provided a viscoelasticity measurement method performed and executed by a processor of a viscoelasticity measuring apparatus, the viscoelasticity measurement method including collecting viscoelastic characteristic data including a loss modulus and a storage modulus measured by applying shear strain to an active material slurry for secondary batteries at a preset interval, calculating a loss factor defined as a ratio between the storage modulus and the loss modulus, and calculating a difference between a current loss factor and a previous loss factor as a loss factor differential, generating time-series data based on the loss factor differential, performing a sliding window analysis on the time-series data and calculating an average value of a plurality of loss factor differentials included in each window, and deriving any one average value from a result of calculating the average value of the plurality of loss factor differentials included in each window, as a damping factor.

According to one or more embodiments of the present disclosure, a viscoelasticity measuring apparatus includes one or more processors and a memory operatively connected to the one or more processors and storing at least one code to be executed by the one or more processors, wherein the memory stores a code that, when executed by the one or more processors, causes to collect viscoelastic characteristic data including a loss modulus and a storage modulus measured by applying shear strain to an active material slurry for secondary batteries at a preset interval, calculate a loss factor defined as a ratio between the storage modulus and the loss modulus, and calculates a difference between a current loss modulus and a previous loss modulus as a loss factor differential, generate time-series data based on the loss factor differential, perform a sliding window analysis on the time-series data to calculate an average value of a plurality of loss factor differentials included in each window, and derive any one average value from a result of calculating the average value of the plurality of loss factor differentials included in each window, as a damping factor.

In addition, one or more other methods for implementing the present disclosure, other systems, and computer-readable recording media storing a computer program for executing the method may be further provided.

According to one or more embodiments of the present disclosure, a viscoelasticity measurement method performed by a processor of a viscoelasticity measuring apparatus includes collecting viscoelastic characteristic data, such as loss modulus and storage modulus, by applying shear strain to an active material slurry for secondary batteries at preset intervals. The method involves calculating a loss factor as the ratio between the storage modulus and the loss modulus, determining the loss factor differential by comparing current and previous loss factors, generating time-series data based on these differentials, performing a sliding window analysis on the time-series data, and calculating an average value of the loss factor differentials within each window to derive a damping factor. Additionally, a viscoelasticity measuring apparatus includes processors and memory storing executable code to perform these measurements and calculations, and other methods, systems, and computer-readable media for implementing the present disclosure may also be provided.

Other aspects, features, and advantages other than those described above will become apparent or be appreciated by person of ordinary skill in the art from the following drawings, appended claims, and detailed description of the present disclosure.

### BRIEF DESCRIPTION OF DRAWINGS

The accompanying drawings attached to the present disclosure illustrate example embodiments of the present disclosure and, together with the detailed description of the present disclosure provided herein, serve to further understand the technical idea of the present disclosure; therefore, the present disclosure should not be interpreted as being limited to the matters described in the drawings, in which:
FIG. 1 illustrates a configuration of a viscoelasticity measuring apparatus according to one or more embodiments of the present disclosure;
FIG. 2 illustrates a configuration of a processor of a viscoelasticity measuring apparatus according to one or more embodiments of the present disclosure;
FIG. 3 is an example of a table showing viscoelasticity characteristic data collected by a processor, according to one or more embodiments of the present disclosure;
FIG. 4 is a diagram illustrating an example of sliding window analysis by a processor, according to one or more embodiments of the present disclosure; and
FIG. 5 is a flowchart for describing a viscoelasticity measurement method according to one or more embodiments of the present disclosure.

### DETAILED DESCRIPTION

Hereinafter, one or more embodiments of the present disclosure will be described in more detail with reference to the accompanying drawings. Accordingly, the features disclosed in the embodiments and drawings of the present specification are examples of embodiments of the present disclosure, and thus it should be understood that there are alternative equivalents or variation examples that may replace the embodiments at the point of the filing of the present application. It will be further understood that the terms "comprise(s)/comprising" and/or "include(s)/including" and/or "has(have)/having" if (e.g., when) used in this disclosure, specify the presence of stated features, numbers, steps, operations, elements, and/or components, but do not preclude the presence or addition of one or more other features, numbers, steps, operations, elements, components, and/or groups thereof. Additionally, the terms "comprise(s)/comprising," "include(s)/including," "has(have)/having", or other similar terms include or support the terms "consisting of" and "consisting essentially of," indicating the presence of stated shapes, numbers, steps, operations, members, and/or components, without or essentially without the presence of other shapes, numbers, steps, operations, members, and/or components. Further, if (e.g., when) describing embodiments of the present disclosure, the phrases "may" and "may include" and "may be" refer to "one or more embodiments of the present disclosure."

Additionally, to aid understanding of the present disclosure, the accompanying drawings may not be drawn to scale, and the dimensions of some elements may be exaggerated. Additionally, like reference numerals may be assigned to like elements in different embodiments.

When two things being compared are said to be "the same", it refers to "substantially the same". Therefore, substantial equivalence may include deviations that are considered relatively low in the art, for example, deviations of less than 5 %. Additionally, uniformity of a parameter over a given region may imply uniformity from an average perspective.

Although the terms "first," "second," and/or the like are used to describe one or more suitable elements, these elements are not limited by these terms. These terms are used only to distinguish one element from another, and unless otherwise specifically stated, it is to be understood that a first element may also be referred to as a second element.

Throughout the disclosure, unless otherwise specifically stated, each element may be singular or plural. For example, as used herein, the singular forms "a," "an," and "the" are intended to include the plural forms as well, unless the context clearly indicates otherwise.

In the disclosure, any configuration being arranged "above (or below)" an element or "on (or under)" an element may refer to not only that the any configuration is arranged in contact with an upper surface (or lower surface) of the element, but also that one or more other configurations may be interposed between the element and the any configuration arranged on (or under) the element. In contrast, if (e.g., when) a configuration is referred to as being "directly on" or "directly under" an element, there are no intervening configuration present therebetween

Additionally, if (e.g., when) an element is described as being "connected," "coupled," or "connected" to another element, it should be understood that the elements may be directly connected or connected to the another element, but that one or more other elements may also be "interposed" therebetween, or that each element may be "connected," "coupled," or "connected" through other elements. Also, if (e.g., when) a part is described as being electrically coupled to another part, this includes not only embodiments in which they are directly connected, but also embodiments in which they are connected with another element therebetween.

Whenever reference is made throughout the disclosure to "A and/or B" or "A or B" or "A/B," this refers to A, B, or A and B, unless otherwise specified. For example, "and/or" and "or" and "/" may include all or any combination of the listed items. "C to D" indicates C or more and D or less, unless otherwise specifically stated. Expressions such as "at least one of," "one of," and "selected from," when preceding a list of elements, modify the entire list of elements and do not modify the individual elements of the list. For example, "at least one of a, b, or c," "at least one selected from a, b, and c," "at least one selected from among a to c," and/or the like, may indicate only a, only b, only c, both (e.g., simultaneously) a and b, both (e.g., simultaneously) a and c, both (e.g., simultaneously) b and c, all of a, b, and c, or variations thereof.

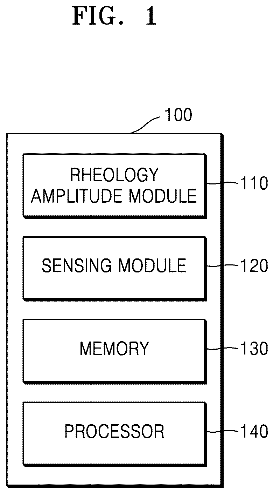

FIG. 1 illustrates a configuration of a viscoelasticity measuring apparatus 100 according to one or more embodiments of the present disclosure. Referring to FIG. 1, a viscoelasticity measuring apparatus 100 may include a rheology amplitude module 110, a sensing module 120, a memory 130, and a processor 140.

The rheology amplitude module 110 may rotate a bearing arranged in an active material slurry for secondary batteries. The rheology amplitude module 110 may control the size of shear strain applied to the active material slurry by controlling rotation amplitude of the bearing when rotating the bearing. The rheology amplitude module 110 may further include a unit for controlling amplitude and frequency to control the rotation amplitude of the bearing. The unit controlling the amplitude and frequency may control the rotation amplitude and speed of the bearing electronically or mechanically.

The sensing module 120 may measure viscoelastic properties including shear strain, shear stress, storage modulus, and a loss modulus of a slurry being rotated. Here, the storage modulus and the loss modulus may be indicators of how closely the slurry resembles a liquid or a solid.

In the present disclosure, the shear strain may be a measure of how much a slurry is deformed by a shear force. Shear strain is a measure of how much a portion of the slurry has moved relative to another portion thereof, and is usually expressed in radians. Mathematically, the shear strain (γ) may be expressed as a displacement (Δx) at a given point, divided by a thickness of a layer (i.e., the layer that the given point is located) or a reference length (h) (γ = Δx / h).

In the present disclosure, the shear stress may refer to an amount of force applied to a slurry per unit area. Shear stress represents the magnitude of force per unit area of a slurry and may be generally measured in units of Pascals (Pa). Mathematically, the shear stress (τ) may be expressed as a relationship between a force F applied to a slurry due to the rotation of a bearing and a contact area of a fluid A (T = F / A).

In the present disclosure, the storage modulus may represent an indicator of the ability of a slurry to elastically store energy. The storage modulus may indicate how elastically a slurry responds to shear deformation. Mathematically, the storage modulus G' may be expressed as (τ'/γ)cos(δ). Here, τ' may represent the amplitude of shear stress. γ may represent the amplitude of shear strain. δ may represent a response phase angle. The response phase angle may represent a time delay between a shear stress response and a shear strain input.

In the present disclosure, the loss modulus may represent an indicator of the ability of a slurry to viscously dissipate energy. Loss modulus may represent the amount of energy loss that occurs in a slurry due to shear deformation. Mathematically, the loss modulus G" may be expressed as (τ'/γ) sin(δ). Here, τ' may represent the amplitude of shear stress. γ may represent the amplitude of shear strain. δ may represent a response phase angle.

In one or more embodiments of the present disclosure, the sensing module 120 may include and measure one or more selected from among a pressure sensor, a strain gauge, and a torque sensor to measure shear strain and shear stress of a slurry. The sensing module 120 may further include a data processing unit that converts a measured value into a digital signal and performs necessary and desired calculations. For example, the sensing module 120 may include one or more sensors, such as a pressure sensor, strain gauge, and/or torque sensor, to measure shear strain and shear stress of the slurry. Additionally, the sensing module 120 may include the data processing unit that converts measured values into digital signals and performs necessary calculations.

The memory 130 may store data used in viscoelasticity measurement. In one or more embodiments, the memory 130 may store viscoelasticity characteristic data detected by the sensing module 120. In addition, the memory 130 may store a result of calculating a loss factor processed by the processor 140, a result of calculating a loss factor differential, a result of calculating an average value of a plurality of loss factor differentials, and a result of deriving a damping factor. Additionally, a sliding window analysis algorithm applied to a calculation result of a loss factor differential may be stored in the memory 130.

In the present disclosure, the memory 130 may be operably connected to the processor 140 and store at least one code associated with an operation performed by the processor 140.

Additionally, the memory 130 may perform a function of temporarily or permanently storing data processed by the processor 140. In one or more embodiments, the memory 130 may include a magnetic storage medium and/or a flash storage medium, but embodiments of the present disclosure are not limited thereto. The memory 130 may include a built-in memory and/or an external memory, and may include one or more selected from among volatile memory (such as dynamic random access memory (DRAM), static random access memory (SRAM), and/or synchronous dynamic random access memory (SDRAM)), nonvolatile memory (such as one-time programmable read-only memory (OTPROM), programmable read-only memory (PROM), erasable programmable read-only memory (EPROM), electrically erasable programmable read-only memory (EEPROM), mask read-only memory (ROM), flash ROM, NAND flash memory, and/or NOR flash memory), flash drives (such as solid stage drive (SSD), CompactFlash(CF) card, secure digital (SD) card, Micro-SD card, Mini-SD card, xD card, and/or memory stick), and/or storage devices (such as hard disk drive (HDD)).

The processor 140 may collect a loss modulus and a storage modulus from the sensing module 120 by applying shear strain to an active material slurry for secondar batteries. The processor 140 may calculate a loss factor and a loss factor differential by using the collected loss modulus and storage modulus. The processor 140 may apply a sliding window analysis technique to a result of calculating the loss factor differential to calculate an average value of loss factor differentials for each window. The processor 140 may derive one of average values of the loss factor differentials for each window as a final damping factor.

In the present disclosure, the processor 140 may process instructions of a computer program by performing arithmetic, logic, and input/output operations. Additionally, the processor 140 may generally control the operation of other elements associated with the rheology amplitude module 110.

The processor 140 may perform at least some of data analysis, processing, and result information generation for performing the above-described operations by using at least one of a machine learning, neural network, or deep learning algorithm as a rule-based or artificial intelligence algorithm. Non-limiting examples of the neural networks may include models such as convolutional neural network (CNN), deep neural network (DNN), and recurrent neural network (RNN). For example, the processor 140 may utilize machine learning, neural network, and/or deep learning algorithms, including models like convolutional neural networks (CNN), deep neural networks (DNN), and/or recurrent neural networks (RNN), to perform data analysis, processing, and result generation for the described operations.

In one or more embodiments, the processor 140 may be implemented as an array of a number of logic gates, or may be implemented as a combination of a general-purpose microprocessor and a memory storing a program that is executed on the microprocessor. For example, in one or more embodiments, the processor 140 may include a general-purpose processor, a central processing unit (CPU), a microprocessor, a digital signal processor (DSP), a controller, a microcontroller, a state machine, and/or the like. In one or more embodiments, the processor 140 may include an application-specific integrated circuit (ASIC), a programmable logic device (PLD), a field programmable gate array (FPGA), and/or the like. For example, in one or more embodiments, the processor 140 may refer to a combination of processing devices, such as a combination of a DSP and a microprocessor, a combination of a plurality of microprocessors, a combination of one or more microprocessors in combination with a DSP core, or any other such combination of configurations.

In one or more embodiments, the viscoelasticity measuring apparatus 100 may further include a communication unit. The communication unit may be linked with a network and transmit data processed by the processor 140 to the outside (e.g., a user terminal). In one or more embodiments, the communication unit may be to transmit, to a user terminal under the control by the processor 140, viscoelastic characteristic data detected by the sensing module 120, a result of calculating a loss factor, a result of calculating a loss factor differential, a result of calculating an average value of a plurality of loss factor differentials, and a result of calculating an damping factor.

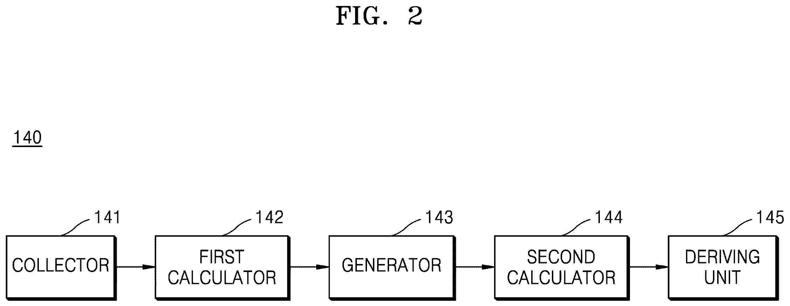

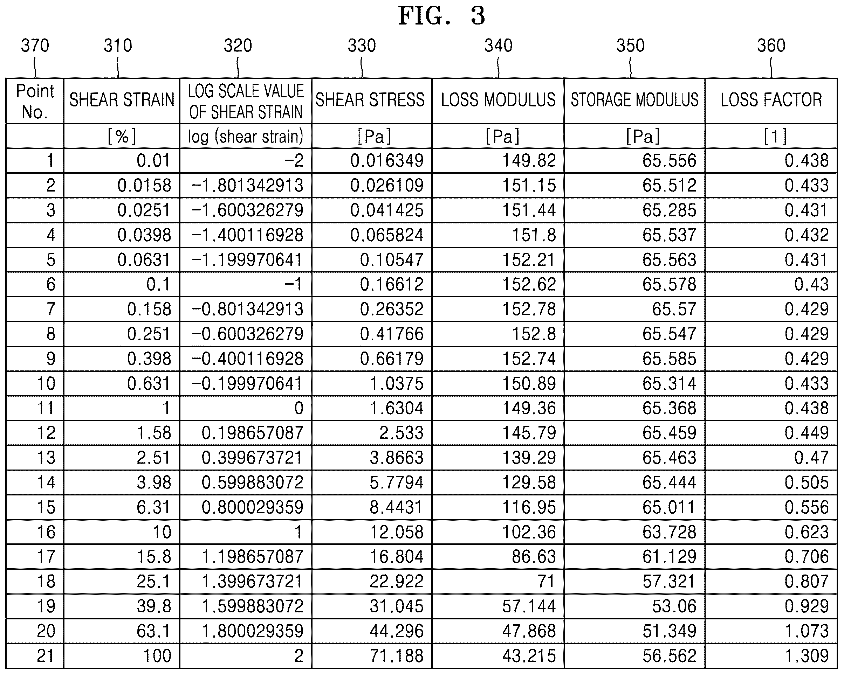

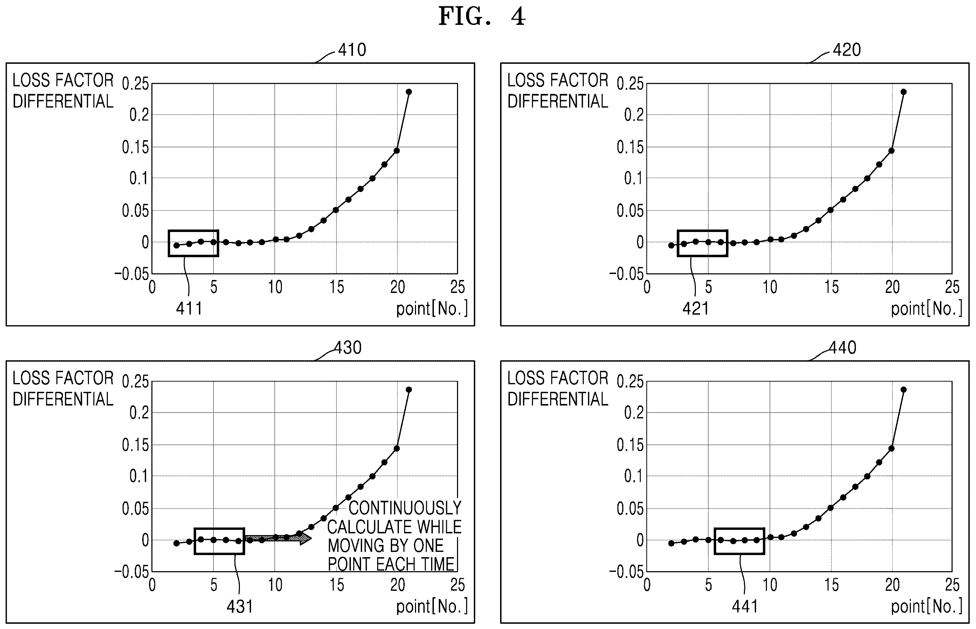

FIG. 2 illustrates a configuration of a processor in a viscoelasticity measuring apparatus 100, according to one or more embodiments of the present disclosure. FIG. 3 is an example of a table showing viscoelasticity characteristic data collected by a processor 140 according to one or more embodiments of the present disclosure. FIG. 4 is a diagram for describing an example of sliding window analysis by a processor 140, according to one or more embodiments of the present disclosure. In the following description, a description of details that overlaps with the description with reference to FIG. 1 will not be provided for conciseness.

Referring to FIGS. 2 to 4, the processor 140 may include a collector 141, a first calculator 142, a generator 143, a second calculator 144, and a deriving unit 145.

The collector 141 may collect viscoelastic characteristic data including a loss modulus and a storage modulus measured by applying shear strain to an active material slurry for secondary batteries at a preset interval. The collector 141 may arrange, into the table of FIG. 3, the viscoelastic characteristic data measured by applying shear strain to the active material slurry at a preset interval.

For example, a preset shear strain 310 from the table of FIG. 3 may be applied to the active material slurry. Here, the shear strain being applied to the active material slurry may refer to shear deformation generated within the active material slurry via a rotating bearing. In one or more embodiments, the preset shear strain may follow a log scale interval starting from an initial value of 0.01[%] and increasing by approximately 1.58 times (10 to the power of 0.2) the previous value at each step until a final value of 100[%] is reached.

Additionally, in one or more embodiments, the shear strain 310 may be expressed as a log scale value 320 of FIG. 3. The shear strain 310 is expressed as the log scale value 320 because a wide range of data from very small values to very large values may be effectively processed using a log scale. Additionally, by using a log scale, changing values may be distributed proportionally. For example, data may be examined while maintaining the relative differences between each data point evenly. On a typical linear scale, relatively small changes may not be noticeable if (e.g., when) the differences between values are large. However, by using a log scale, the visibility of data may be improved as even these small changes are clearly observed.

Additionally, the table of FIG. 3 shows a shear stress 330, a loss modulus 340, and a storage modulus 350 collected by the collector 141 from the sensing module 120 in response to the shear strain 310 at a preset interval.

In one or more embodiments, the data included in the table of FIG. 3 are results obtained through experiments, and they may include values measured under specific environments and conditions. Therefore, these data are not fixed values and may show different results depending on changes in the test environment or conditions.

The first calculator 142 may calculate a loss factor 360 and a loss factor differential by using the loss modulus 340 and the storage modulus 350 disclosed in the table of FIG. 3. In the present disclosure, the loss factor 360 may be calculated as a ratio between the storage modulus 350 and the loss modulus 340 (storage modulus/loss modulus). Additionally, the loss factor differential may be calculated as a difference between a current (t) loss factor and a previous (t-1) loss factor (current (t) loss factor minus previous (t-1) loss factor). For example, the first calculator 142 calculates the loss factor and the loss factor differential using the loss modulus and the storage modulus from FIG. 3. The loss factor is determined as the ratio of the storage modulus to the loss modulus, while the loss factor differential is calculated as the difference between the current loss factor and the previous loss factor.

In the present disclosure, if the loss factor is less than a reference value (e.g., 1), this may indicate that the loss modulus is greater than the storage modulus. This may indicate that the slurry exhibits a predominantly viscous response to external deformation, with more emphasis on dissipating energy. These slurries may be interpreted as having a jelly-like state, and their flowing properties may be emphasized if (e.g., when) deformation is applied.

Additionally, in the present disclosure, if the loss factor is greater than a reference value (e.g., 1), this may indicate that the storage modulus is greater than the loss modulus. This may indicate a property that the slurry elastically stores deformation energy and has low energy dissipation. This slurry may be interpreted as having harder and more elastic properties, like stones.

In the present disclosure, the closer the loss factor of the slurry is to the reference value, the viscoelasticity may be interpreted as being in a more balanced state. If the loss factor of the slurry is less than the reference value, this may be interpreted as a viscosity-dominant state. If the loss factor of the slurry exceeds the reference value, this may be interpreted as an elasticity-dominant state.

The generator 143 may generate time-series data based on a loss factor differential. The generator 143 may generate a graph to visually represent time-series data.

In one or more embodiments, the generator 143 may generate a graph by plotting a preset interval for shear strain as points on an X-axis and plotting a loss factor differential corresponding to the X-axis, on a Y-axis. Here, the points may include a result of converting each value from an initial value to a final value for shear strain, to a log scale, and dividing the log scale by a certain interval. In the table of FIG. 3, a point 370 may refer to the log scale value 320 of shear strain.

410, 420, 430, and 440 of FIG. 4 illustrate graphs generated by plotting a preset interval for shear strain as points on the X-axis and plotting a loss factor differential corresponding to the X-axis, on the Y-axis.

The second calculator 144 may perform a sliding window analysis on the graphs illustrated in FIG. 4 to calculate an average value of a plurality of loss factor differentials included in each window.

In general, a sliding window analysis may involve techniques for performing statistical analysis on successive subsets (windows) of data. To perform sliding window analysis, a size of a window and a step size may be set. Also, what processing to perform on data included in a window may be set.

In one or more embodiments of the present disclosure, the second calculator 144 may set a plurality of points determined at a preset ratio of the points to a total number of points to the size of the window. For example, if the total number of points 370 from FIG. 3 is 21 and a preset ratio is a rounding value of 20 %, 4 points (ABS (21*20%/100) = 4) may be set as the size of the window. The second calculator 144 may set a mechanism for moving the window by one point each time in an X-axis direction on the graph as a step size.

The second calculator 144 may sequentially move the window according to the step size and calculate an average value of a plurality of loss factor differentials included in the window at each position.

410 of FIG. 4 illustrates a first window 411 including points 1 to 4. The second calculator 144 may calculate an average value of a plurality of loss factor differentials included in the first window 411. For example, if the plurality of loss factor differentials corresponding to points 1 to 4 included in the first window 411 are 0.005, 0.002, 0.001, and 0.001, respectively, an average value of 0.00225 may be calculated.

420 of FIG. 4 illustrates a second window 421 which is obtained by shifting the first window 411 by one point in the X-axis direction. The second window 421 may include points 2 to 5. The second calculator 144 may calculate an average value of a plurality of loss factor differentials included in the second window 421. For example, if the plurality of loss factor differentials corresponding to points 2 to 5 included in the second window 421 are 0.002, 0.001, 0.001, and 0.001, respectively, an average value of 0.00125 may be calculated.

430 of FIG. 4 illustrates a third window 431 which obtained by shifting the second window 421 by one point in the X-axis direction. The third window 431 may include points 3 to 6. The second calculator 144 may calculate an average value of a plurality of loss factor differentials included in the third window 431. For example, if the plurality of loss factor differentials corresponding to points 3 to 6 included in the third window 431 are 0.001, 0.001, 0.001, and 0.001, respectively, an average value of 0.001 may be calculated.

In this way, an average value of a plurality of loss factor differentials included in a window may be calculated while moving by one point each time along the X-axis to a last point (21 in FIG. 3).

For example, the loss factor of the slurry indicates its viscoelastic properties. If the loss factor is less than a reference value (e.g., 1), the slurry exhibits a predominantly viscous response, dissipating energy and behaving like a jelly. Conversely, if the loss factor is greater than the reference value, the slurry stores deformation energy elastically, behaving like a solid. The generator 143 creates time-series data and graphs to visually represent these properties, while the second calculator 144 performs sliding window analysis to calculate average values of loss factor differentials within each window, enhancing the understanding of the slurry's viscoelastic behavior.

The second calculator 144 sets the window size based on a preset ratio of points to the total number of points and moves the window one point at a time along the X-axis. It calculates the average value of loss factor differentials within each window, providing a detailed analysis of the slurry's viscoelastic properties. This process is repeated for each position, ensuring a comprehensive evaluation of the slurry's behavior.

The deriving unit 145 may derive any one average value among a result of calculating the average value of the plurality of loss factor differentials included in each window, as a damping factor. In the present disclosure, the deriving unit 145 may determine a window having a minimum average value as a standard period, from the result of calculating the average value. The deriving unit 145 may determine the average value in the standard period as the damping factor. For example, the deriving unit 145 calculates the average value of the loss factor differentials within each window to determine the damping factor. It identifies the window with the minimum average value as the standard period and uses the average value from this period as the damping factor.

440 of FIG. 4 shows a result of detecting a fourth window 441 having a minimum average value by comparing the average values of the respective windows. For example, the fourth window 441 having the minimum average value may include points 6 to 9. The second calculator 144 may calculate an average value of a plurality of loss factor differentials included in the fourth window 441. For example, if the plurality of loss factor differentials corresponding to points 6 to 9 included in the fourth window 441 are 0.001, 0.001, 0, and 0, respectively, the average value is calculated as 0.0005, which may be a minimum average value among the average values of other windows. The deriving unit 145 may determine the fourth window 441 as a standard period and the average value of 0.0005 as an damping factor.

The reason that the minimum average value is determined as the damping factor in the present embodiments is because the minimum average value best reflects optimal or suitable viscoelastic properties of a slurry. When analyzing the loss factor differentials, the window having the minimum average value represents a section where the slurry shows a lowest viscoelastic response to external deformation, which may be an important indicator of the stable and consistent performance of the slurry.

In this way, selecting the minimum average value among the loss factor differentials obtained through sliding window analysis as an damping factor may be used as a method to accurately evaluate the improved or optimized characteristics of the slurry and further increase the applicability of the material.

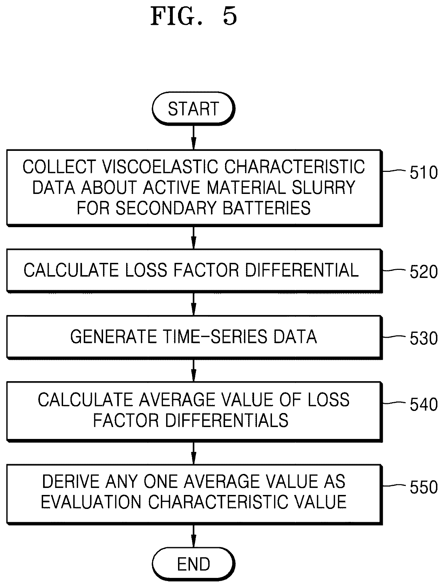

FIG. 5 is a flowchart for describing a viscoelasticity measurement method according to one or more embodiments of the present disclosure. In the description hereinafter, any details that overlap with the description with reference to FIGS. 1 to 4 will not be provided for conciseness. The viscoelasticity measurement method according to one or more embodiments will be described as the viscoelasticity measuring apparatus 100 performing the viscoelasticity measurement method in the processor 140 with the aid of peripheral components (e.g., rheology amplitude module 110, sensing module 120, memory 130, and/or the like).

In operation S510, the processor 140 may collect viscoelastic characteristic data including a loss modulus and a storage modulus measured by applying shear strain to an active material slurry for secondary batteries at a preset interval. In one or more embodiments, when collecting viscoelastic characteristic data, the processor 140 may collect shear stress measured by applying shear strain to the active material slurry for secondary batteries at the preset interval, and may collect the loss modulus and the storage modulus measured based on a phase angle between shear strain and shear stress.

In operation S520, the processor 140 may calculate a loss factor defined as a ratio between the storage modulus and the loss modulus, and calculate a difference between a current loss factor and a previous loss factor as a loss factor differential.

In operation S530, the processor 140 may generate time-series data based on a loss factor differential. In one or more embodiments, the processor 140 may generate a graph to visually represent time-series data. In one or more embodiments, if (e.g., when) generating time-series data, the processor 140 may generate a graph by plotting the preset interval for shear strain as points on an X-axis and plotting a loss factor differential corresponding to the X-axis, on a Y-axis. Here, the processor 140 may convert each value from an initial value to a final value of the shear strain into a log scale and determine a result of dividing the log scale by a certain interval, as the points.

In operation S540, the processor 140 may perform a sliding window analysis on the time-series data to calculate an average value of a plurality of loss factor differentials included in each window. In One or more embodiments, when calculating an average value of loss factors, the processor 140 may load a graph generated by plotting the preset interval for shear strain as points on the X-axis and plotting a loss factor differential corresponding to the X-axis on the Y-axis. The processor 140 may set a window size including a preset number of points on a graph and a step size of a window. The processor 140 may sequentially move the window according to the step size and calculate an average value of a plurality of loss factor differentials included in the window at each position. In one or more embodiments, the processor 140 may set a plurality of points determined at a preset ratio of the points to a total number of points, as the window size, and set a mechanism for moving the window one point each time in the direction of the X-axis as the step size.

In operation S550, the processor 140 may derive any one average value among a result of calculating the average value of the plurality of loss factor differentials included in each window, as a damping factor. In one or more embodiments, the processor 140 may determine a window having a minimum average value as a standard period, from the result of calculating the average value, and determine the average value in the standard period as the damping factor.

According to the present disclosure, the viscoelastic properties of an active material slurry for secondary batteries may be accurately determined, and evaluation results may be standardized, so that all evaluators may evaluate the viscoelastic properties under a same conditions and standards.

Additionally, the data processing process may be simplified through automated evaluation logic, thereby reducing data processing time.

In one or more embodiments of the present disclosure, the viscoelasticity measurement method is performed by the viscoelasticity measuring apparatus 100, which includes components such as the rheology amplitude module 110, sensing module 120, memory 130, and processor 140. The method begins with the processor 140 collecting viscoelastic characteristic data, including loss modulus and storage modulus, by applying shear strain to an active material slurry for secondary batteries at preset intervals. This data collection also involves measuring shear stress and determining the phase angle between shear strain and shear stress.

Next, the processor 140 calculates the loss factor, defined as the ratio between the storage modulus and the loss modulus, and determines the loss factor differential by comparing current and previous loss factors. The processor 140 then generates time-series data based on these differentials and creates a graph to visually represent this data. A sliding window analysis is performed on the time-series data to calculate the average value of the loss factor differentials within each window. The window size and step size are set based on a preset ratio of points to the total number of points. Finally, the processor 140 derives the damping factor by identifying the window with the minimum average value and using this value as the standard period. This method ensures accurate determination and standardization of the viscoelastic properties of the slurry, simplifying the data processing process and reducing evaluation time.

In the context of the viscoelasticity measuring apparatus and unless defined otherwise, the processor and other components may be implemented as electronic circuits. The processor may be an electronic circuit designed to perform data analysis, processing, and result generation. It may execute algorithms, such as machine learning or neural network models, to analyze viscoelastic characteristic data and perform calculations like determining the loss factor and loss factor differential.

The sensing module may include electronic circuits such as pressure sensors, strain gauges, and torque sensors. These sensors measure shear strain and shear stress of the slurry and convert these measurements into digital signals for further processing. The memory may be an electronic storage device that holds the code executed by the processor. It stores data, algorithms, and intermediate results necessary for performing the viscoelasticity measurement method. The rheology module may be an electronic circuit that applies shear strain to the slurry and measures its viscoelastic properties, such as loss modulus and storage modulus.

These components/circuits work together as part of the viscoelasticity measuring apparatus to accurately determine and standardize the viscoelastic properties of an active material slurry for secondary batteries.

In the context of the present disclosure and unless otherwise defined, the terms "use," "using," and "used" may be considered synonymous with the terms "utilize," "utilizing," and "utilized," respectively.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although the present disclosure has been described by referring to example embodiments and drawings, the present disclosure is not limited thereto, and it is obvious to a person skilled in the art to which the present disclosure pertains, that one or more suitable modifications and variations may be made within the scope of the technical idea of the present disclosure, the scope of the appended claims, and the equivalent scope of the appended claims.

## Claims

1. A viscoelasticity measurement method executed by a processor (140) of a viscoelasticity measuring apparatus (100), the viscoelasticity measurement method comprising:
collecting (510) viscoelastic characteristic data comprising a loss modulus (340) and a storage modulus (350) measured by applying shear strain (310) to an active material slurry for secondary batteries at a preset interval;
calculating (520) a loss factor (360) defined as a ratio between the storage modulus (350) and the loss modulus (340), and calculating a difference between a current loss factor and a previous loss factor as a loss factor (360) differential;
generating (530) time-series data based on the loss factor (360) differential;
performing a sliding window (411, 421, 431, 441) analysis on the time-series data and calculating (540) an average value of a plurality of loss factor differentials in each window (411, 421, 431, 441); and
deriving (550) any one average value from a result of calculating the average value of the plurality of loss factor differentials in each window (411, 421, 431, 441), as a damping factor.

2. The viscoelasticity measurement method of claim 1, wherein the collecting of the viscoelastic characteristic data comprises:
collecting a shear stress (330) measured by applying shear strain (310) to the active material slurry for secondary batteries at the preset interval; and
collecting the loss modulus (340) and the storage modulus (350) which are measured based on a phase angle between the shear strain (310) and the shear stress (330).

3. The viscoelasticity measurement method of claim 1 or 2, wherein the generating of the time-series data comprises generating a graph by plotting a preset interval for the shear strain (310) as points (370) on an X-axis and plotting a loss factor (360) differential corresponding to the X-axis, on a Y-axis.

4. The viscoelasticity measurement method of claim 3, wherein the generating of the graph comprises converting each value (320) from an initial value to a final value of the shear strain (310) into a log scale and dividing the log scale by a certain interval and determining a result of the dividing, as points (370).

5. The viscoelasticity measurement method of any one of the preceding claims, wherein the calculating of the average value of the plurality of loss factor differentials comprises:
loading a graph generated by plotting the preset interval for the shear strain (310) as points (370) on an X-axis and plotting the loss factor (360) differential corresponding to the X-axis, on a Y-axis;
setting a size of a window (411, 421, 431, 441) comprising a preset number of points (370) on the graph and a step size of the window (411, 421, 431, 441); and
calculating an average value of a plurality of loss factor differentials in the window (411, 421, 431, 441) at each position while sequentially moving the window (411, 421, 431, 441) according to the step size.

6. The viscoelasticity measurement method of claim 5, wherein the setting comprises setting a plurality of points (370) determined at a preset ratio of the points (370) to a total number of points (370), as a window size, and setting, as the step size, a mechanism for moving the window (411, 421, 431, 441) by one point in a direction of the X-axis.

7. The viscoelasticity measurement method of any one of the preceding claims, wherein the deriving of any one average value from a result of calculating the average value of the plurality of loss factor differentials in each window (411, 421, 431, 441), as the damping factor, comprises:
determining, as a standard period, a window (411, 421, 431, 441) having a minimum average value from the result of calculating the average value; and
determining the average value in the standard period as the damping factor.

8. A viscoelasticity measuring apparatus (100) comprising:
one or more processors (140); and
a memory (130) operatively connected to the one or more processors (140) and storing at least one code to be executed by the one or more processors (140),
wherein the memory (130) stores a code that, when executed by the one or more processors (140), enables the one or more processors (140) to:
collect viscoelastic characteristic data comprising a loss modulus (340) and a storage modulus (350) measured by applying shear strain (310) to an active material slurry for secondary batteries at a preset interval;
calculate a loss factor (360) defined as a ratio between the storage modulus (350) and the loss modulus (340), and calculate a difference between a current loss modulus and a previous loss modulus as a loss factor (360) differential;
generate time-series data based on the loss factor (360) differential;
perform a sliding window (411, 421, 431, 441) analysis on the time-series data to calculate an average value of a plurality of loss factor differentials in each window (411, 421, 431, 441); and
derive any one average value from a result of calculating the average value of the plurality of loss factor differentials in each window (411, 421, 431, 441), as a damping factor.

9. The viscoelasticity measuring apparatus (100) of claim 8, wherein the memory (130) stores a code that enables the one or more processors (140) to, in the collecting of the viscoelastic characteristic data, collect a shear stress (330) that is measured by applying shear strain (310) to the active material slurry for secondary batteries at the preset interval, and collect the loss modulus (340) and the storage modulus (350) based on a phase angle between the shear strain (310) and the shear stress (330).

10. The viscoelasticity measuring apparatus (100) of claim 8, wherein the memory (130) stores a code that enables the one or more processors (140) to, in the generating of the time-series data, generate a graph by plotting the preset interval for the shear strain (310), as points (370) on an X-axis, and plotting the loss factor (360) differential corresponding to the X-axis, on a Y-axis.

11. The viscoelasticity measuring apparatus (100) of claim 10, wherein the memory (130) stores a code that enables the one or more processors (140) to, in the generating of the graph, convert each value (320) from an initial value to a final value of the shear strain (310) into a log scale, divide the log scale by a certain interval, and determine a result of the dividing, as points (370).

12. The viscoelasticity measuring apparatus (100) of any one of the claims 8 to 11, wherein the memory (130) stores a code that enables the one or more processors (140) to, in the calculating of the average value of the plurality of loss factor differentials, :
load a graph generated by plotting a preset interval for the shear strain (310) as points (370) on an X-axis and plotting the loss factor (360) differential corresponding to the X-axis, on a Y-axis;
set a window (411, 421, 431, 441) comprising a preset number of points (370) on the graph; and
calculate an average value of a plurality of loss factor differentials in the window (411, 421, 431, 441) at each position while moving the window (411, 421, 431, 441) by one point in a direction of the X-axis.

13. The viscoelasticity measuring apparatus (100) of claim 12, wherein the memory (130) stores a code that enables the one or more processors (140) to, in the setting of the window (411, 421, 431, 441), set the window (411, 421, 431, 441) comprising a number of points (370) determined according to a preset ratio of the points (370) to a total number of points (370).

14. The viscoelasticity measuring apparatus (100) of any one of the claims 8 to 13, wherein the memory (130) stores a code that enables the one or more processors (140) to,
in the deriving of any one average value from a result of calculating the average value of the plurality of loss factor differentials in each window (411, 421, 431, 441), as the damping factor, determine, as a standard period, a window (411, 421, 431, 441) having a minimum average value from the result of calculating the average value, and
determine the average value in the standard period, as the damping factor.

15. A viscoelasticity measuring apparatus (100) comprising:
one or more processors (140);
a memory (130) operatively connected to the one or more processors (140) and storing at least one code to be executed by the one or more processors (140); and
a sensing module (120) configured to measure shear strain (310) and shear stress (330) of an active material slurry for secondary batteries,
wherein the memory (130) stores a code that, when executed by the one or more processors (140), enables the one or more processors (140) to:
collect viscoelastic characteristic data comprising a loss modulus (340) and a storage modulus (350) measured by applying shear strain (310) to the active material slurry for secondary batteries at a preset interval;
calculate a loss factor (360) defined as a ratio between the storage modulus (350) and the loss modulus (340), and calculate a difference between a current loss factor and a previous loss factor as a loss factor (360) differential;
generate time-series data based on the loss factor (360) differential; perform a sliding window (411, 421, 431, 441) analysis on the time-series data to calculate an average value of a plurality of loss factor differentials in each window (411, 421, 431, 441); and
derive any one average value from a result of calculating the average value of the plurality of loss factor differentials in each window (411, 421, 431, 441), as a damping factor.
